# EUROPEAN PATENT APPLICATION

(11) **EP 4 123 469 A2**
(43) Date of publication of application: **25.01.2023**
(21) Application number: 22185281.7
(22) Date of filing: 15.07.2022
(51) Int. Cl.: G06F 15/80

(54) **SCALABLE COMPUTING DEVICE**

(30) Priority: 22.07.2021 FR 2107913
(71) Applicant: Commissariat à l'énergie atomique et aux énergies alternatives, 75015 Paris (FR)
(72) Inventor: PHILIPPE, Antony, 38054 GRENOBLE CEDEX 09 (FR); DUTOIT, Denis, 38054 GRENOBLE CEDEX 09 (FR)
(74) Representative: Cabinet Beaumont

(57) **Abstract**

The present disclosure relates to a network chip (108) comprising: a programmable infrastructure (201) having a plurality of access points (202); at least one chiplet communications interface (3D PLUG) suitable for interfacing with at least one chiplet (110), each chiplet communications interface (3D PLUG) being coupled to a corresponding one of the access points (202); and a plurality of network-to-network communications interfaces (206, 208, 210, 212) each suitable for interfacing with another network chip (108).

## Description

### Technical field

The present disclosure relates generally to the field of computer architectures, and in particular to a scalable system on chip.

### Background art

As known in the art, a system on chip (SoC) is an integrated circuit that integrates some or all of the components forming a computing system, including one or more CPUs (central processing units), memory, input/output ports, among other functions. In some cases, a system on chip may be paired with another integrated circuit providing additional memory, taking advantage of Advanced Packaging techniques.

A drawback of existing architectures of system on chip is that there is a relatively high design burden for producing a system having a required amount of processing resources and memory for a given application. Furthermore, existing solutions have very limited scalability, meaning that when the processing or memory resources are to be increased or reduced, significant redesign is necessary, which is time consuming and costly. Further still, the reusability of components is very limited, which in many cases can lead to high levels of waste.

### Summary of Invention

It is an aim of embodiments of the present disclosure to at least partially address one or more drawbacks in the prior art.

According to one aspect, there is provided a network chip comprising: a programmable infrastructure having a plurality of access points; at least one chiplet communications interface suitable for interfacing with at least one chiplet, each chiplet communications interface being coupled to a corresponding one of the access points; and a plurality of network-to-network communications interfaces each suitable for interfacing with another network chip.

According to one embodiment, the network chip further comprises a memory circuit coupled to each router.

According to one embodiment, at least one of the memory circuits is reconfigurable as either a cache memory or a scratch pad memory of the first processing element, the first processing element for example comprising a memory management unit defining an allocation of cache memory and/or scratch pad memory to the first processing element.

According to one embodiment, at least one of the memory circuits is a non-volatile memory.

According to one embodiment, the programmable infrastructure is a network on chip, and the access points are NoC routers of the network on chip.

According to a further aspect, there is provided a computing device comprising: the above network chip mounted on a substrate.

According to one embodiment, the computing device further comprises at least one further network chip mounted on the substrate, the network chip and the at least one further network chip being interconnected by the network to network communications interfaces.

According to one embodiment, the network chips are identical to each other, at least one of the network chips having an orientation different to at least one other of the network chips.

According to one embodiment, each of the access points of each network chip is assigned and stores an address based on its location in its programmable infrastructure and based on the orientation of the network chip with respect to the other network chips.

According to one embodiment, each network chip comprises, at a first of its edges, an external memory interface, and wherein a first of the network chips is orientated so that its first edge is adjacent to a first edge of the computing device, and a second of the network chips is orientated so that its first edge is adjacent to a second edge of the computing device, the first and second edges of the computing device for example being perpendicular edges, or opposite edges, of the computing device.

According to one embodiment, the computing device further comprises: at least one chiplet positioned on the network chip, each chiplet comprising at least a first processing element coupled, via a chiplet communications interface, to a first of the access points of the network chip on which the chiplet is positioned.

According to one embodiment, each chiplet is configured to operate in an asynchronous manner with respect to the network chip on which it is positioned.

According to one embodiment, the at least one chiplet is positioned on the network chip in a face-to-face arrangement.

According to one embodiment, the at least one chiplet is positioned on the network chip in a face-to-back arrangement.

According to a further aspect, there is provided a method of conception of the above computing device, comprising the conception of the at least one chiplet based on a network chip model representing the network chip.

According to yet a further aspect, there is provided a method of configuring a computing device comprising one or more network chips mounted on a substrate, the method comprising: detecting, by a first of the network chips, the number and orientation of network chips of the computing device, wherein each network chip implements a programmable infrastructure having a plurality of access points; and detecting, by the first network chip, the presence or absence of at least one chiplet positioned on each network chip and coupled, via a chiplet communications interface, to at least a first of the access points of the network chip on which the chiplet is positioned.

### Brief description of drawings

The foregoing features and advantages, as well as others, will be described in detail in the following description of specific embodiments given by way of illustration and not limitation with reference to the accompanying drawings, in which:
Figure 1A is a cross-section view schematically illustrating a computing device according to an example embodiment of the present disclosure;
Figure 1B is a plan view schematically illustrating the computing device of Figure 1A according to an example embodiment;
Figure 1C is a cross-section view schematically illustrating part of the cross-section of Figure 1A in more detail according to an example embodiment;
Figure 2 schematically illustrates a network chip of the computing device of Figures 1A, 1B and 1C in more detail according to an example embodiment;
Figure 3 is a plan view schematically illustrating an arrangement of components in a network chip of Figure 2 according to an example embodiment;
Figure 4 schematically illustrates a system on chip comprising an arrangement of network chips according to an example embodiment;
Figure 5 schematically illustrates the network chip in more detail according to an example embodiment;
Figure 6 schematically illustrates a chiplet of the computing device of Figures 1A, 1B and 1C in more detail according to an example embodiment;
Figure 7 schematically illustrates a compute cluster of the chiplet of Figure 6 according to an example embodiment;
Figure 8 schematically illustrates a compute cluster of the chiplet of Figure 6 according to a further example embodiment;
Figure 9 is a plan view of a computing system according to a further example embodiment of the present disclosure;
Figure 10 is a plan view of a computing system according to yet a further example embodiment of the present disclosure;
Figure 11 is a flow diagram illustrating operations in a method of configuring a computing device according to an example embodiment of the present disclosure;
Figure 12 schematically represents chiplet detection circuitry according to an example embodiment; and
Figure 13 schematically represents a conception system for the conception of a computing device according to an example embodiment of the present disclosure.

### Description of embodiments

Like features have been designated by like references in the various figures. In particular, the structural and/or functional features that are common among the various embodiments may have the same references and may dispose identical structural, dimensional and material properties.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

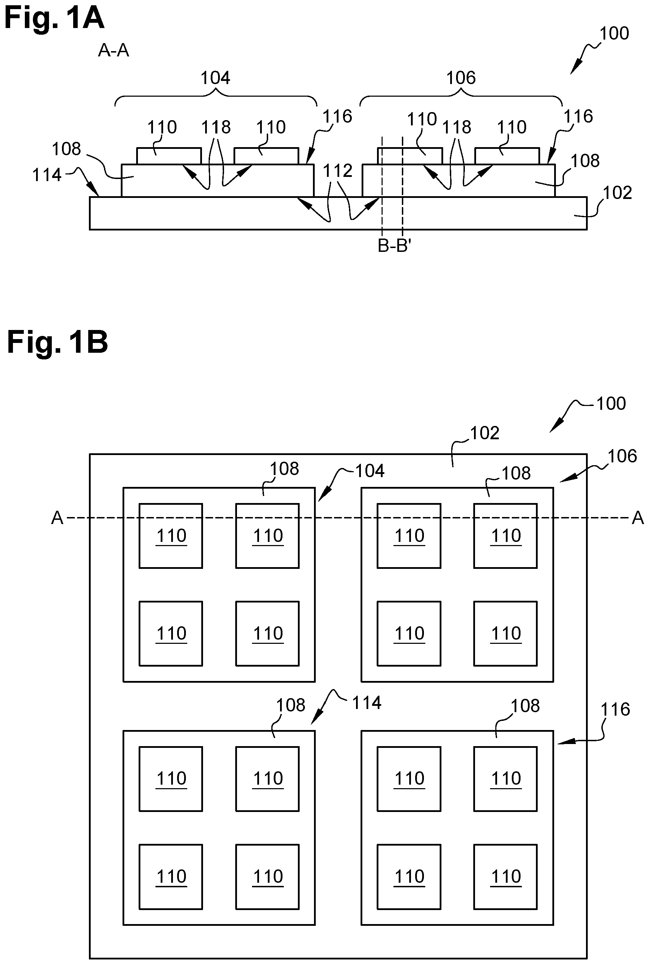

Figure 1A is a cross-section view schematically illustrating a computing device 100 according to an example embodiment of the present disclosure.

The computing device 100 is for example a 3D integrated circuit, that comprises an assembly of several chips to implement the computing device 100 with data processing and memory storage resources.

The computing device 100 comprises a substrate 102, on which is mounted a plurality of computing stacks 104, 106. Two such computing stacks are illustrated in the view of Figure 1A. Each computing stack 104, 106 comprises a network chip 108, and one or more chiplets 110 mounted on the network chip 108. In the view of Figure 1A, two chiplets 110 are visible on each network chip 108. The substrate 102 is for example a PCB (printed circuit board) . Alternatively, it could be a package substrate intended, for example, to be mounted on a PCB or the like. For example, the substrate 102 could be an organic or ceramic substrate. According to yet a further example, the substrate 102 is another type of connection layer, such an interposer, formed for example of silicon.

The network chips 108 each for example have an underside 112 in contact with a surface 114 of the substrate 102. In some embodiments, the undersides 112 of the network chips 108 each comprise connection interfaces, such as an array of bumps (not illustrated in Figure 1A), providing electrical connections between the substrate 102 and the network chip 108. Additionally or alternatively, other types of connection interfaces could be provided between the network chips 108 and the substrate 102, including one or more wire bonds between the surface 114 of the substrate and a surface 116 of each network chip 108, each surface 116 for example being on an opposite side of the network chip 108 to the underside 112.

The chiplets 110 each for example have an underside 118 in contact with the surface 116 of the network chip 108 on which it is mounted or positioned. In some embodiments, the undersides 118 of the chiplets each comprise connection interfaces, such as direct metal-to-metal bonding layers, also known as hybrid bonding layers (not illustrated), providing electrical connections between the network chip 108 and each chiplet 110. Additionally or alternatively, other types of connection interfaces, such as micro bumps, or copper pillars, could be used between each chiplet 110 and the network chip 108 on which it is mounted.

The network chips 108 each for example have a footprint of between 40 and 300 sq.mm, such as of around 80 sq.mm, while each chiplet 110 for example has a footprint of between 10 and 100 sq.mm, and for example up to 64 sq.mm in some embodiments.

Each network chip 108 for example assures a networking role for communications between chiplets 110 and/or other network chips 108. In some embodiments, the network chips 108 may be infrastructure chips that provide further functions and/or resources in addition to the networking role, such as memory resources, power management and security, as will be described in more detail below.

Figure 1B is a plan view schematically illustrating the computing device 100 of Figure 1A according to an example embodiment of the present disclosure.

In the example of Figure 1B, the computing device 100 comprises four computing stacks 104, 106, 114 and 116 mounted on the substrate 102 in a two-by-two arrangement, in other words in two columns of stacks, each column comprising two rows of stacks. A dashed line A-A in Figure 1B, passing through the stacks 104 and 106, represents the place at which the cross-section view of Figure 1A is taken.

Each of the computing stacks 104, 106, 114 and 116 is for example capable of communicating with at least one other of the computing stacks, via communication paths formed in and/or above the substrate 102. For example, while not illustrated in Figure 1B, communications paths are for example present between each computing stack 104, 106, 114 and 116 and it nearest neighbors in the column and row directions. Thus, in the case of a two-by-two arrangement, each computing stack may communicate directly with two other computing stacks, and with the third other computing stack via one intermediate computing stack.

In alternative embodiments, there could be a different number of computing stacks, and they could be arranged in a different arrangement, such as in a linear arrangement. An advantage of a 2-dimensional rather than linear arrangement of the computing stacks is that it leads to shorter distances for at least some of the communications paths between the computing stacks.

In the example of Figure 1B, each of the computing stacks 104, 106, 114, 116 comprises four chiplets 110 mounted on its corresponding network chip 108 in a two-by-two arrangement, in other words in two columns of chiplets, each column comprising two rows of chiplets.

Each of the chiplets 110 is for example capable of communicating with each of the other chiplets of the same computing stack via communications paths formed in the network chip 108. Furthermore, each of the chiplets 110 is for example capable of communicating with chiplets 110 mounted on other network chips 108 via network-to-network communications interfaces described in more detail below.

In alternative embodiments, there could be a different number of chiplets 110 mounted or positioned on each network chip 108, and they could be arranged differently. In some embodiments, one or more network chip 108 could have no chiplet mounted thereon, and could be used to provide memory resources and/or other functions such as interfacing with external resources.

Furthermore, rather than there being a plurality of network chips 108, it would also be possible for the device 100 to comprise only a single network chip 108, with or without any chiplet 110 mounted thereon.

Indeed, the network chip 108 for example provides a generic building block of a computing device, that can for example be fabricated on relatively large scale such that the unit cost is relatively low, and which serves as a versatile module providing memory and routing resources, as well as other functions such as management functions (memory, power, security, etc.).

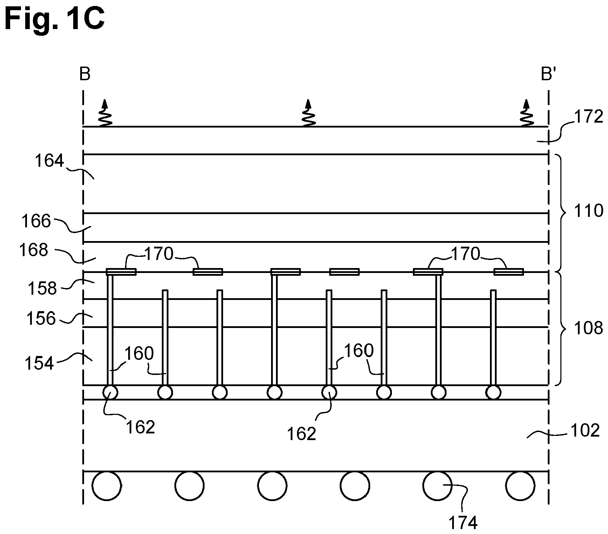

Figure 1C is a cross-section view schematically illustrating a portion B-B' of the cross-section of Figure 1A in more detail according to an example embodiment. In particular, the portion B-B' passes vertically through the substrate 102, and through the network chip 108 and chiplet 110 of the computing stack 106.

In the example of Figure 1C, the network chip 108 and chiplet 110 are assembled in a face-to-face arrangement. The "face" of an integrated circuit chip corresponds to the side closest to the metal interconnection levels, while the "back" corresponds to the side closest to the substrate, generally formed of silicon.

In some embodiments, the same transistor technology can be used to fabricate the chip 108 and chiplet 110. For example, both the chip 108 and chiplet 110 could be fabricated using the technology known to those skilled in the art as 28 nm, 22 nm, 16 nm or 14 nm FinFET technology. Alternatively, they could be fabricated using different technologies, the chiplet for example being fabricated using the technology known to those skilled in the art as 7 nm or 5 nm FinFET technology.

The network chip 108 for example comprises a substrate 154, for example formed of silicon or another semiconductor, a transistor layer 156 formed on the substrate 154 and for example comprising transistor gate stacks formed on the substrate 154, and an interconnection layer 158 formed on the transistor layer 156 and comprising levels of metal, interconnecting transistors of the transistor layer 156. For example, the interconnection layer 158 comprises a layer of dielectric material in which levels of metal in defined patterns have been formed in order to provide connections between the transistors or other devices formed in the transistor layer.

An interface between the chiplet 110 and the network chip 108 is for example implemented by an RDL (redistribution layer), for example a hybrid bonding layer between the chips. For example, this layer comprises interconnection pads 170. In one example, these interconnection pads 170 have a pitch of between 1 and 10 µm. The interconnection pads 170 for example comprise copper-to-copper bonding pads formed between the interconnection layers 158 and 168 of the chip 108 and chiplet 110 respectively.

A number of interconnection vias, such as TSVs (through silicon vias), 160 extend from the interconnection layer 158, through the transistor layer 156 and substrate 154, to an underside or backside of the network chip 108, where they are for example connected to bumps 162. Furthermore, in some embodiments, one or more of the interconnection vias 160 extend to a corresponding interconnection pad 170 formed on the surface of the interconnection layer 158 for interconnecting with the chiplet 110.

The chiplet 110 for example comprises a substrate 164, for example formed of silicon or another semiconductor, a transistor layer 166 formed on the substrate 164 and for example comprising transistor gate stacks formed on the substrate 164, and an interconnection layer 168 formed on the transistor layer 166 and comprising levels of metal interconnecting transistors of the transistor layer 166, in a similar fashion to the interconnection layer 158 of the network chip 108.

In some embodiments, a heat spreader 172 is formed on the backside of the chiplet 110.

The network chip 108 is for example mounted on the substrate 102 via the bumps 162. In some embodiments, the substrate 102 is a package substrate comprising connecting vias (not represented in Figures 1A, 1B, 1C) between the bumps 162 and BGA (Ball Grid Array) balls 174 positioned on an underside of the substrate 102. The BGA balls 174 are for example used for electrically connecting the package to a circuit board (not illustrated).

The network chip 108 for example comprises a network on chip (NoC) having memory circuits (not illustrated in Figure 1C), and the interconnection vias 160 are for example formed at regular intervals in spaces formed between the memory circuits of the NoC. In some embodiments, one or more of the interconnection vias 160 is coupled to a supply voltage rail of the network chip 108 for supplying a supply voltage, such as a VDD or GND voltage, to the network chip 108, and/or one or more of the interconnection vias 160 is coupled, via one of the interconnection pads 170, to a supply voltage rail of the chiplet 110 for supplying a supply voltage, such as a VDD or GND voltage, to the chiplet 110. An advantage of providing supply voltages to the network chip 108 and/or chiplet 110 via regularly spaced interconnection vias 160 is that they can be used to supply the voltage supply rails of the chip/chiplet, which are for example regularly spaced in the interconnection layers 158, 168 of the respective chip/chiplet. Advantageously, this permits either or both chip and chiplet to be supplied with relatively low IR (current resistance) drop.

While in the embodiment of Figure 1C the chip 108 and chiplet 110 are stacked face-to-face, in alternative embodiments, they could be stacked face-to-back, for example with the interconnection layer 168 (face) of the chiplet 110 contacting the substrate 154 (back) of the network chip 108. Thus, the interconnection layer 158 of the network chip 108 contacts the substrate 102, for example via the bumps 162, facilitating interconnections therebetween. In such a case, the network chip 108 for example comprises interconnection vias (not illustrated) extending from the bumps 162, through the substrate 154 and transistor layer 156, to the interconnection layer 168 of the chiplet 110, and providing supply voltages and/or other signals to the chiplet 110, and also interconnection vias (also not illustrated) extending from the interconnection layer 158 of the network chip 108, through the substrate 154 and transistor layer 156, to the interconnection layer 168 of the chiplet 110, and providing communication channels between the network chip 108 and the chiplet 110.

While interconnection pads 170 have been described between the network chips 108 and chiplets 110, which for example provide electrical connections based on hybrid bonding, in alternative embodiments, other technologies could be used for the electrical interface between the network chips 108 and chiplets 110, such as arrays of micro bumps, arrays of copper pillars, etc.

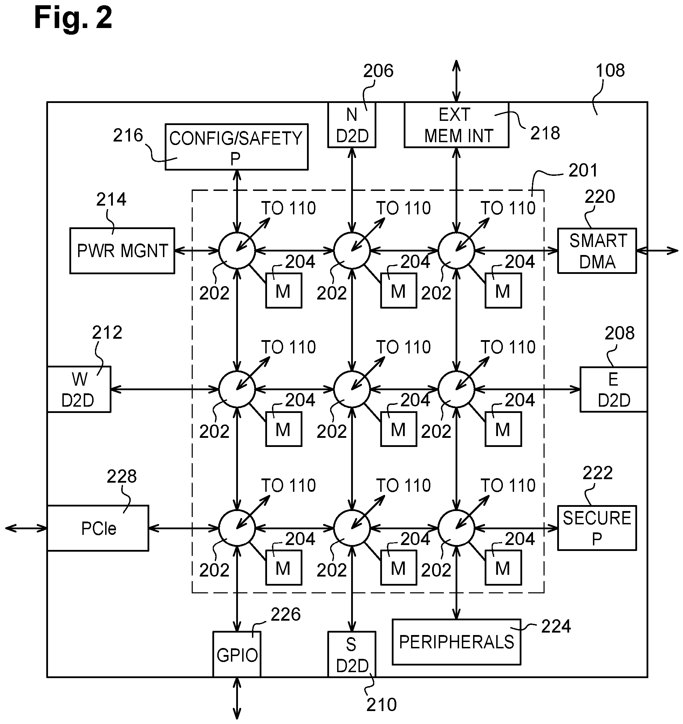

Figure 2 schematically illustrates the network chip 108 of the computing device of Figures 1A to 1C in more detail according to an example embodiment.

The network chip 108 for example comprises a NoC 201 formed of a plurality of NoC routers 202. The NoC routers 202 are arranged in a 2-dimensional grid of rows and columns, each NoC router 202 for example communicating with adjacent nodes in its row and column. In the example of Figure 2, there are nine NoC routers 202 arranged in three columns and three rows. However, in alternative embodiments, there could be a different number of nodes arranged in any pattern.

Each of the NoC routers 202 is coupled to a corresponding memory circuit (M) 204, each of which is for example a volatile memory such as an SRAM (static random access memory), or a non-volatile memory (NVM).

In addition to the connection to each memory 204, each of the NoC routers 202 for example has five input/output interfaces, represented by double-headed arrows in Figure 2. One of these input/output interfaces of each NoC router 202 is for example reserved for a connection to a chiplet 110 positioned on the network chip 108. One or more of the NoC routers 202 for example has each of its other four input/output interfaces coupled to its four neighboring nodes in the NoC 201. This is for example the case for the central NoC router 202 in the 3-by-3 arrangement of Figure 2. More generally, it is for example the case for any node that is not located at an edge (including corner) of the NoC.

At least one of the input/output interfaces of the NoC routers 202 along each of the four edges of the NoC 201 is for example coupled to a corresponding network-to-network interface, which will also be referred to herein as a die-to-die interface, 206 (N D2D), 208 (E D2D), 210 (S D2D), 212 (W D2D). In the example of Figure 2, the interfaces 206, 208, 210 and 212 are respectively on the top, right, bottom and left edges of the NoC 201, which will be referred to herein as north, east, south and west edges. The interfaces 206, 208, 210 and 212 are for example coupled to input/output interfaces of NoC routers 202 located along edges, but not corners, of the NoC 201. Such NoC routers 202 for example have three of their input/output interfaces coupled to three neighboring NoC routers 202 in the same row or column, and one spare input/output interface, which is for example coupled to the corresponding die-to-die interface 206, 208, 210, 212. The term "spare input/output interface" is used to designate those input/output interfaces of the NoC routers 202 that are not used for interconnections within the NoC 201 or the chiplet 110, and are thus available for providing connections to components outside the NoC 201.

The NoC routers 202 located at the corners of the NoC 201 for example have two of their input/output interfaces coupled to two neighboring NoC routers 202, and two spare input/output interfaces. For example:
- an NoC router 202 in the top left corner of the NoC 201, in other words at the corner between the north and west edges, has its spare input/output interfaces coupled respectively to a power management circuit (PWR MGNT) 214 and to a configuration and/or safety processor (CONFIG/SAFETY P) 216. The power management circuit 214 is for example configured to set a voltage and/or frequency operating point of the one or more chiplets 110 that are positioned on the network chip 108. For example, the power management circuit 214 is configured to perform a dynamic voltage and frequency scaling (DVFS) control procedure. The safety processor 216 for example handles the configuration and safety management of the computing stack comprising the network chip 108, including for example the configuration of the system, defining for instance the global address space of the complete system that could implement multiple network chips 108, and/or the control and surveillance of the safety rules and the management of errors that may occur in the system;

- an NoC router 202 in the top right corner of the NoC 201, in other words at the corner between the north and east edges, has its spare input/output interfaces coupled respectively to an external memory interface (EXT MEM INT) 218 positioned for example on the north edge of the network, the memory controller for example being a double data-rate (DDR) memory controller, and to a memory access circuit (SMART DMA) 220 positioned for example on the east edge of the network, the memory access circuit 220 for example being a direct memory access (DMA) circuit, which is configurable. In some embodiments, the DMA is a smart DMA circuit implementing specific features such as data manipulation and/or "memory to data streaming", in addition to the classical memory to memory transfers. The smart DMA also for example implements multiple configuration channels to be usable by multiple requestors. The external memory interface 218 and the memory access circuit 220 are for example capable of being coupled to off-chip memories (not illustrated in Figure 2), although depending on the orientation of the network chip 108, either or both may be non-utilized;
- an NoC router 202 in the bottom right corner of the NoC 201, in other words at the corner between the east and south edges, has its spare input/output interfaces coupled respectively to a secure processor (SECURE P) 222, and to one or more peripherals (PERIPHERALS) 224. The secure processor 222 for example handles security of the computing stack comprising the network chip 108, including for example the implementation of the hardware root of trust, secure boot management and the support for some advanced cryptology services;
- an NoC router 202 in the bottom left corner has its spare input/output interfaces coupled respectively to a general-purpose input/output (GPIO) interface 226 positioned for example on the south edge of the network, and to a bus interface (PCIe) 228 positioned for example on the west edge of the network, the bus interface 228 for example being an express peripheral component interface (PCIe). The interfaces 226 and 228 are for example capable of being coupled to off-chip circuits (not illustrated in Figure 2), although depending on the orientation of the network chip 108, either or both may be non-utilized.

The various interfaces, such as for example the die-to-die interfaces 206, 208, 210 and 212, the general-purpose IO interface 226, the DMA interface 220, the external memory interface 218, and the bus interface 228, are for example powered-off when not used, or if not connected to any external device, in order to save energy.

The operation of the NoC 201 is for example as follows. Each router 202 of the NoC 201 is for example assigned, and stores, an address in the form of x,y coordinates as a function of its row and column position in the NoC. A data packet arriving at a router 202 for example compares the destination address of the data packet with its assigned address. If the addresses match, the router 202 for example stores the data packet in its memory 204, from where it is accessible by another component coupled to this router, such as a chiplet 110 or one of the communications interfaces coupled to the router. If, however, the addresses do not match, the data packet is for example forwarded through the NoC based on the relative values of the coordinates of the destination address with respect to those of the router. In one example, data packets are forwarded by the router 202 to the destination column (e.g. x direction) prior to being forward to the destination row (e.g. y direction). Thus, if the x coordinate of the destination address is higher than the x coordinate of the address of the router, then the data packet is for example forwarded in the positive x direction, which is for example towards the right in Figure 2, whereas if the x coordinate of the destination address is lower than the x coordinate of the address of the router, then the data packet is forwarded in the negative x direction, which is for example towards the left in Figure 2. If the x coordinates match, then the data packet is already in the correct column, and the correct row is found. Thus, if the y coordinate of the destination address is higher than the y coordinate of the address of the router, then the data packet is forwarded in the positive y direction, which is for example upwards in Figure 2, whereas if the y coordinate of the destination address is lower than the y coordinate of the address of the router, then the data packet is forwarded in the negative y direction, which is for example downward in Figure 2. The next router then for example applies a similar operation. If the packet reaches one of the die-to-die interface 206, 208, 210, 212, it is for example transferred to the neighboring network chip, where it continues its journey to the target resource. Of course, many variations of this procedure can be applied, such as the choice of starting by forwarding packets to the destination column or row, the choice of positive and negative address directions in the network, etc.

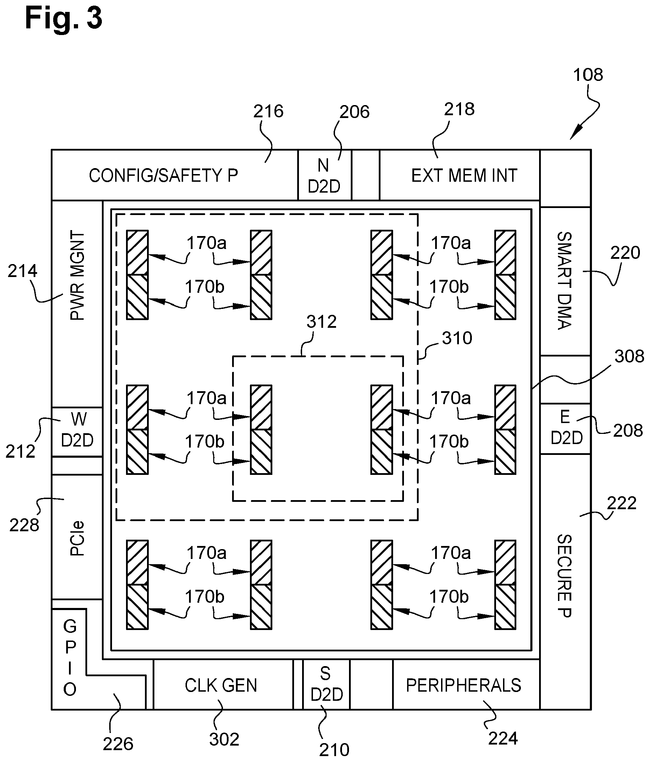

Figure 3 is a plan view schematically illustrating an arrangement of components in one of the network chips 108 of Figure 2 according to an example embodiment.

The components 216 (CONFIG/SAFETY P), 206 (N D2D), 218 (EXT MEM INT), 220 (SMART DMA), 208 (E D2D), 222 (SECURE P), 224 (PERIPHERALS), 210 (S D2D), 226 (GPIO), 228 (PCIe), 212 (W D2D) and 214 (PWR MGNT) are for example placed in a periphery area of the network chip 108, which in the example of Figure 3 is in the form of a rectangular band running along each edge of the NoC 201. Furthermore, a clock generation circuit (CLK GEN) 302 is also for example present in this periphery area, for example between the die-to-die interface 210 and the GPIO interface 226. In some examples, the network chip 108 and one or more of the chiplets 110 positioned thereon operate in a synchronous manner. In such a case, the clock generation circuit 302 of the network chip 108 for example generates one or more clock signals provided not only to the components of the network chip 108, but also to one or more of the chiplets positioned thereon. Alternatively, one or more of the chiplets 110 may operate asynchronously with respect to the network chip 108 on which it is positioned, such chiplets 110 comprising their own clock generators and thus their own clock domain. In such a case, a clock signal generated by the clock generation circuit 302 may still be provided to such chiplets 110 for data communications, for example for clocking, within the chiplet 110, data signals supplied from the network chip 108 to the chiplet 110. In some embodiments, no clock signal is provided from the network chip 108 to one or more of the chiplets 110. In such a case, the communications between the network chip 108 and each chiplet 110 is for example asynchronous, and resynchronization is for example performed on communications passing between these clock domains of the network chip 108 and chiplet 110.

The NoC 201 of the network chip 108 is for example formed in a central rectangular region of the chip. As illustrated in Figure 3, the surface of this central region for example comprises groups of interconnection pads 170 for connecting with one or more chiplets 110. The example of Figure 3 is based on a network chip 108 having 12 groups of interconnection pads 170, arranged four-by-three, each of which is for example coupled to a corresponding one of the NoC routers 202 of Figure 2. Thus, this is a different example to the one of Figure 3, in which the NoC 201 comprises a three-by-three arrangement of NoC routers 202.

For example, the interconnection pads are arranged in pairs of groups of pads 170a, 170b, each pair of groups of pads 170a, 170b being coupled to a corresponding NoC router 202 of the NoC 201, one of the groups for example providing communications from the network chip 108 to the chiplet 110, and the other group of pads for example providing communications from the chiplet 110 to the network chip 108. Each group of pads 170a, 170b for example comprises one or more individual pads for assuring the communications, which may be based on serial and/or parallel data transmission.

As represented by a rectangle 308, in one embodiment, the chiplet 110 has a footprint that covers all of the groups of interconnection pads 170a, 170b, and for example has corresponding interconnection pads that contact all or some of the groups of pads 170a, 170b.

In alternative embodiments, a smaller chiplet 110, having a footprint that covers only some of the groups of pads 170a, 170b, could be used. In the example of Figure 3, there are three rows of four pairs of groups of pads 170a, 170b, and a dashed rectangle 310 represents an example in which the chiplet 110 has a footprint covering six pairs of groups of pads 170a, 170b, while a dashed rectangle 312 represents an example in which the chiplet 110 has a footprint covering two pairs of groups of pads 170a, 170b. In the case of chiplets 110 covering only some of the groups of pads 170a, 170b, it would be possible to have multiple chiplets 110, like in the example of Figures 1A and 1B, each having a footprint that for example covers at most half of the pairs of groups of pads 170a, 170b. Each chiplet 110 for example covers and is coupled with at least one of the pair of pads 170a, 170b in order to interact with the network chip 108. If a chiplet 110 covers more than one pair of pads 170a, 170b, it is for example coupled with and uses at least one of the pairs of pads 170a, 170b, and may or not additionally use one, some or all of the other pairs of pads 170a, 170b in order to communicate with the network chip 108. Indeed, this will depend on the bandwidth needs for the communication between the network chip 108 and the chiplet 110. Consequently, by covering and using multiple pairs of pads 170a, 170b, the chiplet 110 can also scale and adapt its communication bandwidth to the network chip 108 and other resources, such as external memory and the PCIe interface in particular.

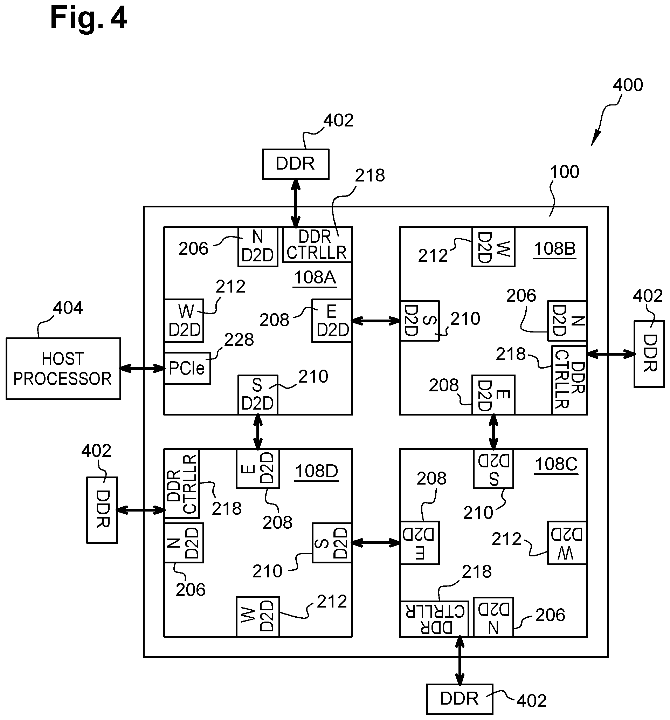

According some embodiments, each of the network chips 108 of Figures 1 to 3 is implemented by an identical chip, and these chips are orientated on the substrate 102 in order to permit desired interconnections among the network chips 108 and with components outside of the computing device 100. One particular example comprising a two-by-two arrangement of network chips 108 will now be described in more detail with reference to Figure 4.

Figure 4 schematically illustrates a computing system 400 comprising the computing device 100, external memories 402 (DDR), and a host processor (HOST PROCESSOR) 404. Each of the memories 402 is for example a double data rate synchronous dynamic random-access memory (DDR SDRAM).

The computing device 100 comprises four network chips 108, arranged two-by-two, and which are labelled 108A, 108B, 108C and 108D in Figure 4. For example, each of the network chips 108 of the computing device 100 is coupled to a corresponding one of the memories 402, there being four memories 402 in the example of Figure 4. Each memory 402 is, for example, coupled to the external memory interface (EXT MEM INT) 218 of the corresponding network chip 108. The memories 402 being located externally to the computing device, the network chips 108A to 108D are for example arranged such that each has its external memory interface 218 adjacent to a corresponding edge of the device 100, and thus each of the network chips 108A to 108D is for example orientated differently in each of the four orientations 0°, 90°, 180° and 270°.

According to the example of Figure 4, the network chip 108A in a top left corner of the device 100 has its north edge adjacent to a top edge of the device 100. This orientation will be considered to be the 0° orientation. The east and south die-to-die interfaces (E D2D, S D2D) 208, 210 of this network chip 108A are coupled respectively to the network chip 108B in the top right corner of the device 100 and to the network chip 108D in the bottom left corner of the device 100, the north and west die-to-die interfaces (N D2D, W D2D) 206, 212 not being coupled to anything.

Similarly, the network chip 108B in a top right corner of the device 100 has its north edge adjacent to a right edge of the device 100, in other words it is at the 90° orientation. The east and south die-to-die interfaces (E D2D, S D2D) 208, 210 of the network chip 108B are coupled respectively to the network chip 108C in the bottom right corner of the device 100 and to the network chip 108A in the top left corner of the device 100, the north and west die-to-die interfaces (N D2D, W D2D) 206, 212 of the network chip 108B not being coupled to anything.

Similarly, the network chip 108C in a bottom right corner of the device 100 has its north edge adjacent to a bottom edge of the device 100, in other words it is at the 180° orientation. The east and south die-to-die interfaces (E D2D, S D2D) 208, 210 of the network chip 108C are coupled respectively to the network chip 108D in the bottom left corner of the device 100 and to the network chip 108B in the top right corner of the device 100, the north and west die-to-die interfaces (N D2D, W D2D) 206, 212 of the network chip 108C not being coupled to anything.

Similarly, the network chip 108D in a bottom left corner of the device 100 has its north edge adjacent to a left edge of the device 100, in other words it is at the 270° orientation. The east and south die-to-die interfaces (E D2D, S D2D) 208, 210 of the network chip 108D are coupled respectively to the network chip 108A in the top left corner of the device 100 and to the network chip 108C in the bottom right corner of the device 100, the north and west die-to-die interfaces (N D2D, W D2D) 206, 212 of the network chip 108D not being coupled to anything.

The host processor 404 is for example coupled to the bus interface (PCIe) 228 of the network chip 108 in the top left corner of the device 100. This bus interface 228 is for example at the west edge of this network chip, and the host processor 404 is therefore for example coupled via the left side of the device 100. The bus interfaces (PCIe) 228 of the three other network chips 108 are for example inactive. In some embodiments, rather than there being a host processor 404 coupled to the computing device 100 via one of the bus interfaces 228, the computing device 100 comprises an internal processor, for example a microprocessor. For example, such an internal processor could be implemented in the network chip 108, or by a dedicated one of the chiplets 110..

In order for data packets to be able to arrive at any router of any of the network chips 108, the various routers are for example assigned addresses, in the form of x,y coordinates, that are different in each network, and which are for example not only a function of the relative positions of the routers within each NoC 201, but are also a function of the relative locations and orientations of the network chips 108. For example, the same x coordinate is assigned to routers in a same column of NoCs 201 of two different network chips that are vertically aligned, whereas the y coordinates vary. Similarly, the same y coordinate is assigned to routers in a same row of NoCs 201 of two different network chips that are horizontally aligned, whereas the x coordinates vary. For example, assuming the case in which each NoC comprises a nine-by-nine array of routers, the addresses are as follows:
- the routers of the NoC 108A are assigned x,y coordinates from (0,0) to (2,2), where (0,0) is the top left router in the NoC of the chip 108A, and (2,2) is the bottom right router in the NoC of the chip 108A;
- the routers of the NoC 108B are assigned x,y coordinates from (3,0) to (5,2), where (3,0) is the top left router in the NoC of the chip 108B, and (5,2) is the bottom right router in the NoC of the chip 108B;
- the routers of the NoC 108C are assigned x,y coordinates from (3,3) to (5,5), where (3,3) is the top left router in the NoC of the chip 108C, and (5,5) is the bottom right router in the NoC of the chip 108C; and
- the routers of the NoC 108D are assigned x,y coordinates from (0,3) to (2,5), where (0,3) is the top left router in the NoC of the chip 108D, and (2,5) is the bottom right router in the NoC of the chip 108D.

While Figure 4 illustrates an example with four network chips 108, in the case of a computing device 100 having fewer network chips 108, their orientations are for example chosen based on the relative locations of the external memories 402. In the case of a greater number of network chips 108, such as six or nine network chips 108 arranged in rows of three, the one or more intermediate network chips 108 are for example arranged such that their north edges are adjacent to an edge of the device 100, so that the external memory interfaces 218 are accessible.

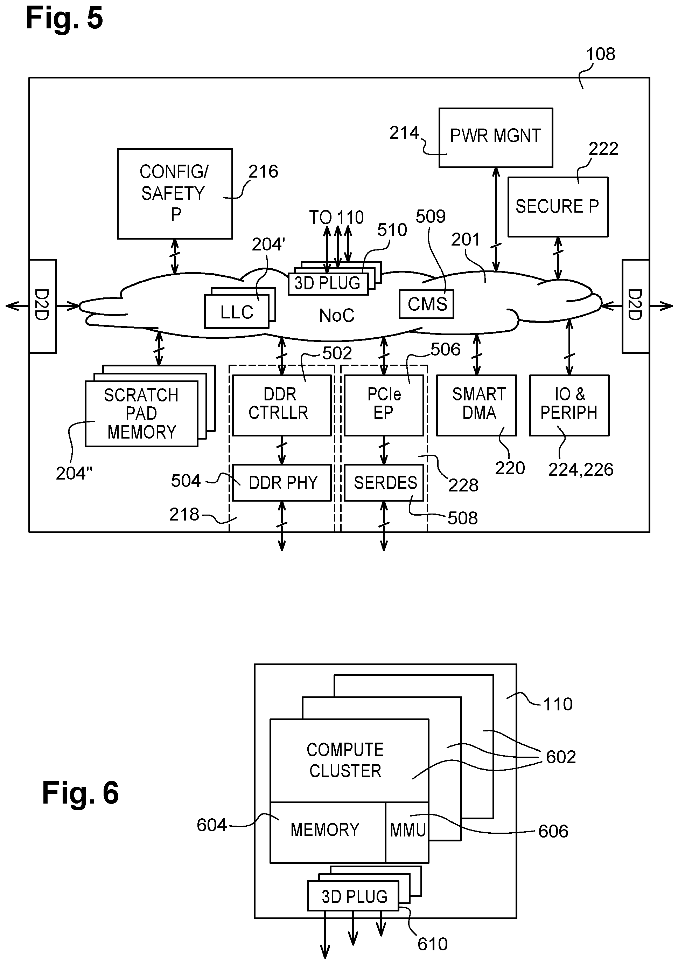

Figure 5 schematically illustrates one of the network chips 108 in more detail according to an example embodiment.

The network chip 108 for example comprises the components coupled to the NoC 201, including the power management circuit 214 (PWR MGNT), the configuration and/or safety processor (CONFIG/SAFETY P) 216, the external memory interface 218, the memory access circuit 220 (SMART DMA), the secure processor 222 (SECURE P), the general purpose input/output interface 224 and peripheral interface 226 (IO & PERIPH) and the bus interface 228, as described above with reference to Figure 2.

In the example of Figure 5, the external memory interface 218 comprises a DDR controller (DDR CTRLLR) 502 coupled to the NoC 201, and a DDR physical layer (DDR PHY) 504 coupling the DDR controller 502 with the exterior of the chip 108.

Furthermore, in the example of Figure 5, the bus interface 228 provides an interface with an off-chip serial bus, and for example performs parallel to serial, and serial to parallel, conversion. For example, the bus interface 228 comprises a PCIe endpoint (PCIe EP) circuit 506 coupled to the NoC 201, and a serializer/de-serializer (SERDES) 508 coupling the PCIe endpoint circuit 506 with the exterior of the chip 108.

In some embodiments, the memories 204 of the NoC 201 are each reconfigurable to provide either cache memory, such as last level cache (LLC) 204' or a system level cache, or scratch pad memory (SCRATCH PAD MEMORY) 204". In some embodiments, the network chip 108 comprises all of its memories configured as cache 204', or all of its memories configured as scratch pad memory 204", while in other embodiments, at least one of the memories of the network chip 108 is configured as a cache memory 204', and at least one of the memories is configured as a scratch pad memory 204". A difference between a cache memory and a scratch pad memory is that the cache memory represents a local copy of data stored elsewhere, such as in one of the external memories 402, whereas a scratch pad memory provides a local data storage relatively close to a processor core that is not a cache, and thus its content is not stored elsewhere. For example, a scratch pad memory is a private memory of a given processing element, and is for example used exclusively by the given processing element.

For example, the NoC 201 comprises a cache management system (CMS) 509, which manages which of the memories 204 are used as cache memory, and for example participates in a cache hardware coherency scheme implemented on the NoC 201. The cache management system 509 is for example implemented in a decentralized approach among the NoC nodes 202 of the network, implying that there is no central cache correspondence table, although other approaches would also be possible. The cache resources of the system are for example defined during an initialization phase.

The use of certain memories 204 as scratch pad memories is for example defined within the global address space (GAS) of the system at the software level, and one or more memory management units (described on more detail below) of each chiplet 110 is for example configured during the initialization phase based on the defined global address space.

The NoC 201 for example comprises a plurality of chiplet interface circuits (3D PLUG) 510. For example, there is one chiplet interface circuit 510 per NoC router 202 of the NoC 201, allowing each NoC router 202 to be coupled to a chiplet 110.

Figure 6 schematically illustrates functions of a chiplet 110 of the computing device 100 of Figures 1A, 1B and 1C according to an example embodiment. Each of the chiplets 110 of the computing device 100 for example comprises similar circuits. For example, each chiplet 110 comprises one or more processing elements (COMPUTE CLUSTER) 602, which will be referred to herein as compute clusters. Each compute cluster 602 for example comprises a memory (MEMORY) 604, and a memory management unit (MMU) 606.

The memory management unit 606 for example provide a memory interface between each compute cluster 602 and one or more memory spaces that have been allocated to it in the network chip. In particular, the MMU ensures translation between address spaces, for instance between the user address space, which is the one used by the programming language of the chiplet 110, and the physical address space, which exists at the hardware level. Thanks to the MMU, a large memory region can be continuous at programmer level (user space) while being split and distributed to multiple, nonconsecutive, memory locations from a physical point of view.

The chiplet 110 also for example comprises one or more network chip interface circuits (3D PLUG) 610 for communicating with the network chip 108 on which the chiplet 110 is positioned. For example, the number of network chip interface circuits 610 is equal to the number of compute clusters 602 and also for example to the number of NoC routers 202 that the chiplet 110 is capable of being coupled to. This for example depends on the dimensions of the chiplet 110, and on the bandwidth needs between the network chip 108 and the chiplet 110.

The communications interface between the network chips 108 and the chiplets 110, comprising the chiplet interface circuit 510 and network chip interface circuit 610, for example provides a physical channel over which one or more virtual channels are established for communications between the network chip 108 and the chiplet. For example, the physical channel comprises at least one conductor for transmitting data, and at least one conductor for transmitting a clock signal. Further conductors may for example transmit control signal, a reset signal, and/or test signals, such as BIST (built-in self-test) signals. In some embodiments, this interface comprises buffering in order to manage data flows, and may be based on a credits system. For example, the interface could be implemented according to any of the solutions described in the patent application published on 10 January 2018 with publication number EP3267305, these solutions being based on the use of credits between the receiving and transmitting sides. For example, the communications interface allows two-way communications between the network chip and chiplet, and thus for example comprises a transmitter and a receiver on both sides.

In some embodiments, the chiplet interface circuit 510 and network chip interface circuit 610 support at least one master port, and/or at least one slave port. In some embodiments, there is at least one master and at least one slave port. In some embodiments, the chiplet comprises a slave port associated with accelerator compute clusters, and a master port associated with CPU compute clusters.

The communications interface between the network chip 108 and each chiplet 110 for example supports a communications protocol for communications between these elements, and in particular, a communications protocol for the transmission of data, as well as addresses, indications of operations to be executed, e.g. load, store, requests for MMU and/or cache refills. Furthermore, the communications interface for example supports one or more of: data channels for control, security, power management and/or safety, a data coherency channel, address translation in the chiplet, and interrupt handling. In some embodiments, the interface between the network chip 108 and each chiplet 110 also supports power and clock domain crossing, comprising for example the appropriate voltage and/or timing adjustments in view of different silicon technologies implemented by the chips.

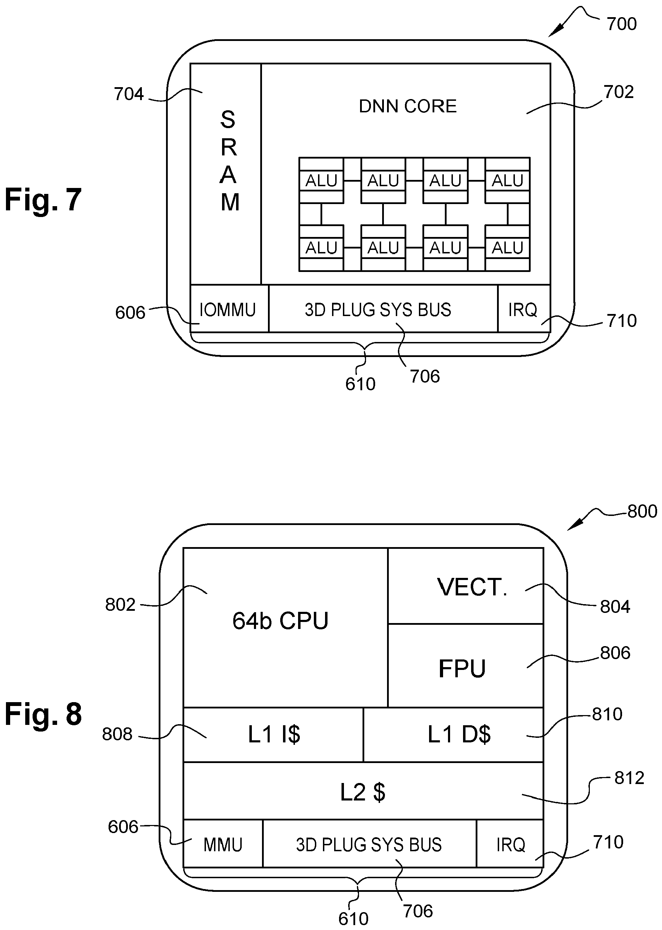

Figure 7 schematically illustrates DNN accelerator 700 for example implementing one of the compute clusters 602 of the chiplet 110 of Figure 6. According to the example of Figure 7, the DNN accelerator 700 is a DNN (deep neural network) core or accelerator comprising a DNN core (DNN Core) 702 comprising for example a network of arithmetic logic units (ALU) . The DNN accelerator 700 further comprises memory (SRAM) 704, which is for example a volatile memory such as an SRAM. The DNN accelerator 700 further comprises, for example, the network chip interface circuit 610, which for example comprises a network chip interface system bus (3D PLUG SYS BUS) 706, an input/output memory management unit (IOMMU) 708, and an interrupt request module 710 configured to receive interrupts via the network chip 108 that are destined for the compute cluster 702. As an alternative to a DNN, the accelerator 700 could alternatively implement another type of artificial intelligence processor or network, or another type of application specific accelerator, such as an FPGA (field programmable gate array).

Figure 8 schematically illustrates a compute cluster 800 for example implementing one of the compute clusters 602 of the chiplet 110 of Figure 6. According to the example of Figure 8, the compute cluster 800 is a CPU (central processing unit), and for example comprises a 64-bit CPU (64b CPU) 802, and in some cases one or more other processing circuits, such as a vector processor (VECT.) 804 and a floating-point unit (FPU) 806. The cluster 800 further comprises one or more cache memories, such as a level one instruction cache (L1 I$) 808, a level one data cache (L1 D$) 810, and a level two cache (L2 $) 812, which is for example common for instructions and data. The compute cluster 800 further comprises, for example, the network chip interface circuit 610, which is for example the same as the circuit 610 of Figure 7, except that the IOMMU 708 is replaced in the compute cluster 800 by an MMU 814. As an alternative to a CPU, the compute cluster 800 could alternatively implement a graphics processing unit (GPU).

As mentioned above, an MMU defines a relation (in terms of address translation) between logical and physical addresses of memory locations. An MMU is directly handled by a processor, which actually allocates memory and keeps track in its MMU. An IOMMU is commonly attached to a slave of an accelerator, such as the DNN core 702, which also relies on this address translation. The accelerator may not allocate memory by itself, but is for example able to access a memory location pointed by the main processor. Furthermore, the IOMMU for example allows a CPU that wishes to use an accelerator to drive the accelerator directly using logical (or user) addresses, because the IOMMU, in sync with the CPU MMU, will handle the translation. Without an IOMMU, the Host CPU would have to use only physical addresses when passing a memory pointer to the accelerator. This translation could become very demanding on CPU resources, because it has to switch context to do so. The IOMMU for example handles that address translation automatically, in hardware.

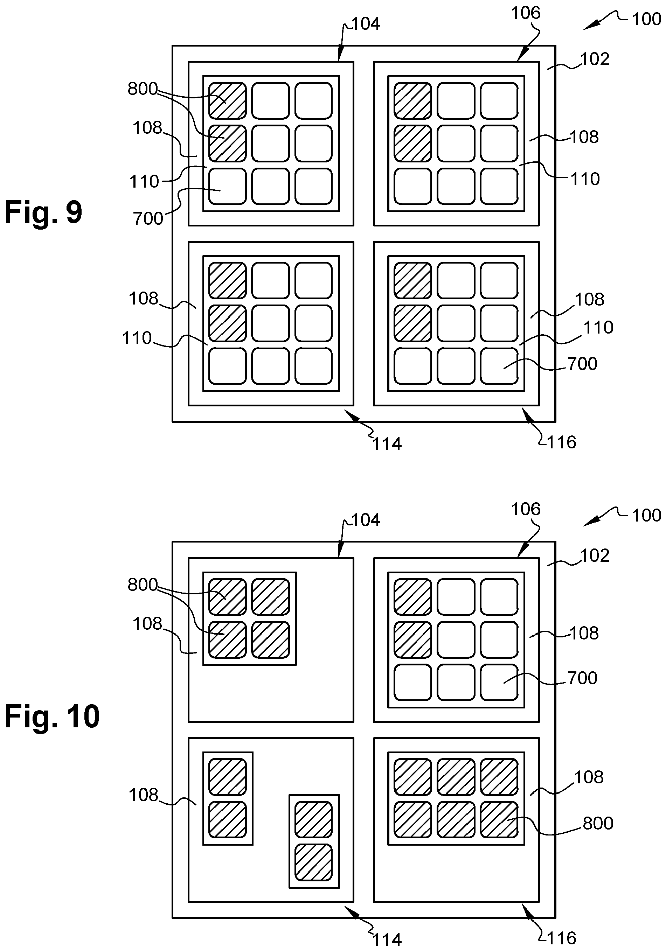

Some or all of the chiplets 110 of the computing device 100 for example comprises only compute clusters 610 of a single type, such as a general-purpose CPU like the compute cluster 800 of Figure 8, or a specific hardware circuit such as the DNN accelerator 700 of Figure 7. Alternatively, one, some or all of the chiplets 110 of the computing device 100 may comprise compute clusters of more than one type. Some examples will now be described with reference to Figures 9 and 10.

Figure 9 is a plan view of the computing device 100 according to an example embodiment according to which each chiplet 110 comprises two types of compute clusters. For example, like in the example of Figure 1B, the computing device 100 comprises four computing stacks 104, 106, 114 and 116. In the example of Figure 9, each of the computing stacks comprises a single chiplet 110 mounted on the corresponding network chip 108. Each chiplet 110 for example comprises nine compute clusters arranged in three columns and three rows, each compute cluster being coupled to a corresponding NoC router 202 (not illustrated in Figure 9) of the NoC 201 of the corresponding network chip 108. As represented by shaded cells, the top left and top center compute cluster of each chiplet 110 is for example implemented by a general-purpose CPU 800, and the other compute clusters are for example specific hardware circuits such as accelerators, an example of which being the DNN accelerator 700.

Figure 10 is a plan view of the computing device 100 according to an example embodiment according to which each chiplet 110 comprises a single type of compute cluster. Each compute cluster is for example coupled to a corresponding NoC router 202 of the NoC 201 (not illustrated in Figure 10) of the corresponding network chip 108. For example, like in the example of Figure 1B, the computing device 100 comprises four computing stacks 104, 106, 114 and 116.

The computing stack 104 for example comprises a single chiplet 110 mounted on the corresponding network chip 108 and comprising four compute clusters corresponding to general-purpose CPUs in a two-by-two arrangement.

The computing stack 106 for example comprises a single chiplet 110 mounted on the corresponding network chip 108 and comprising nine compute clusters corresponding to specific hardware circuits, such as DNN accelerators 700, arranged in a three-by-three arrangement.

The computing stack 114 for example comprises two chiplets 110 mounted on the corresponding network chip 108, each of the chiplets 110 comprising two general-purpose CPUs such as the CPU core 800 of Figure 8.

The computing stack 116 for example comprises a single chiplet 110 mounted on the corresponding network chip 108 and comprising six general-purpose CPUs such as the CPU core 800 of Figure 8.

The computing device 100 as described herein has advantages in terms of scalability and configurability, it being possible for a designer to assemble a number of network chips 108, and a number and type of chiplets that meet the requirements for a given application, including processing capability, power consumption, and memory storage capacity.

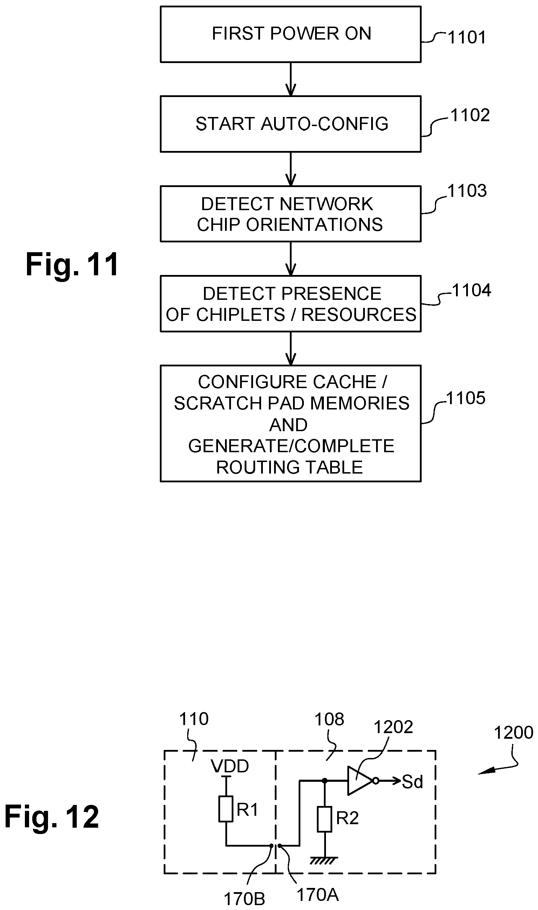

In order for the computing device 100 to be functional, each of the NoC routers 202 of the NoC is for example programmed in order to correctly route data packets to and from the various chiplets 110. This information is for example defined in a routing table stored by some or all of the NoC routers 202, and/or by the die-to-die interfaces. In some embodiments, the first time that the computing device 100 is powered on after assembly, an automatic configuration procedure is launched in order for the system to automatically discover the available resources and to generate the routing table. An example of such a procedure will now be described with reference to Figures 11 and 12.

Figure 11 is a flow diagram illustrating an example of operations in a method of configuring the computing device 100 described herein. This method is for example implemented by the network chips 108, and for example by the configuration processor 216 implemented in the network chips 108.

In an operation 1101 (FIRST POWER ON), the computing device 100 is for example powered on for a first time. For example, the computing device 100 has been assembled with at least one network chip 108, and one or more chiplets 110 mounted on one, some or all of the network chips 108. It would also be possible for some network chips 108 to have no chiplet 110 mounted thereon. Furthermore, the bus interface 228 of one of the network chips 108 has for example been coupled to a system bus of a computing system in which the computing device 100 is to be integrated. In some embodiments, a host processor, such as the host processor 404 of Figure 4, is accessible via this system bus. Furthermore, in some embodiments, one or more external memories, such as the memories 402 of Figure 4, have been coupled to external memory interfaces 218 of one or more of the network chips 108.

In an operation 1102 (START AUTO-CONFIG), an autoconfiguration procedure is for example launched. In the case the computing device 100 comprises a plurality of network chips 108, one of these network chips is for example designated as a network chip that boots first and manages the autoconfiguration process. This network chip 108 will be referred to as the primary network chip. For example, the network chip 108 having its bus interface 218 coupled to the system bus is the primary network chip, and for example detects this bus, and launches the autoconfiguration procedure. Alternatively, each network chip 108 comprises a configuration input pin (not illustrated), and the primary network chip 108 is identified by tying this configuration input pin to a given voltage level, such as a supply voltage VDD, whereas the pin of each other network chip 108 is tied to another level such as ground.

In an operation 1103 (DETECT NETWORK CHIP ORIENTATIONS), the primary network chip for example launches a detection procedure to detect the presence and orientations of the network chips 108 in the computing device 100. For example, the primary network chip is configured to detect whether any further network chip is coupled to any of its die-to-die interfaces 206, 208, 210, 212, and the orientations of such chips, and then to request that each newly discovered network chip performs a similar verification, and reports back, this operation being repeated until no more new network chips are discovered.

Taking the example of Figure 4, the network chip 108A is the primary network chip, and for example transmits signals from each of its die-to-die interfaces 206, 208, 210, 212 to detect further chips and to request their orientations. It thus, for example, determines that its north and west interfaces 206, 212 are not coupled to any other chips, that its east die-to-die interface 208 is coupled to a south die-to-die interface 210 of the network chip 108B, and that its south die-to-die interface 208 is coupled to an east die-to-die interface 210 of the network chip 108D. In some embodiments, the network chips 108B and 108D also communicate to the primary network chip their identifier numbers, which are unique identifiers, at least among the network chips 108 of the device 100, thus permitting the primary network chip 108A to determine that the network chips 108B and 108D are distinct chips. The primary network chip 108A then for example requests that each of the network chips 108B, 108D performs a similar detection via its die-to-die interfaces, and reports back. The network chip 108B for example reports that its east die-to-die interface 208 is coupled to the south die-to-die interface 210 of the network chip 108C, and the network chip 108D for example reports that its south die-to-die interface 210 is coupled to the east die-to-die interface 208 of the network chip 108C. The primary network chip 108A is thus able to determine, by the identifier of the chip 108C, that it is a same chip coupled to both of the network chips 108B, 108D. In some embodiments, the primary network chip 108A is then configured to request, via the network chip 108B or 108D, that the network chip 108C performs a similar detection via its die-to-die interfaces, and reports back. This time, no new network chips are for example discovered, and thus the operation 1103 terminates. In the case of a greater number of network chips, this procedure for example continues until all of the network chips and their orientations have been discovered.

In an operation 1104 (DETECT PRESENCE OF CHIPLETS/RESOURCES), each network chip 108 of the device 100 is for example configured to detect the presence of one or more chiplets mounted or positioned on it, and of any further resources, such as memory or peripherals, coupled to it. For example, the primary network chip performs this detection at each of its NoC routers, and requests that each other discovered network chips performs a similar verification, and reports back. The presence of peripherals, or external resources, are for example detected using the corresponding interfaces 218, 224, 226 described in relation with Figure 2. In some embodiments, the presence of a chiplet is detected by a dedicated circuit, as will now be described with reference to Figure 12.

Figure 12 schematically represents chiplet detection circuitry 1200 according to an example embodiment. Each network chip 108 for example comprises, in association with each of its NoC routers 202, an interconnection pad 170A dedicated to chiplet detection. Each chiplet 110 for example comprises, for example for each NoC router 202 that it is to communicate with, an interconnection pad 170B also dedicated to chiplet detection.

The connection pad 170B is for example coupled, in the chiplet 110, to a supply voltage rail (VDD) via a resistor R1. The connection pad 170A is for example coupled, in the network chip 108, to a ground voltage via a resistor R2, and to the input of a buffer 1202, implemented for example by an inverter. The buffer 1202 generates a detection signal Sd indicating when a chiplet 110 is present. The resistance of resistor R2 is for example greater than the resistance of the resistor R1. For example, the resistor R1 has a resistance in the range 30 to 100 ohms, and the resistor R2 has a resistance in the range 1k to 500k ohms. Thus, when no chiplet 110 is present, the voltage at the pad 170A is for example held low by the resistor R2, and the inverter 1202 outputs a high value. When a chiplet 110 is present, the connection pads 170A and 170B are in electrical contact with each other, and the voltage at the pad 170A thus increases to a relatively high level, causing the signal Sd to go low, and thus indicating the presence of the chiplet 110.

Depending on the chip-to-chip interface technology, the pads 170A, 170B could be implemented by micro bumps or other types of chip-to-chip connections.

Of course, the circuit of Figure 12 provides just one example of a mechanism for detecting the presence of a chiplet, other solutions being possible.

In some embodiments, for each chiplet detected, a security procedure is applied prior to permitting the chiplet to be integrated into the computing device 100. For example, this involves an authentication procedure, based for example on the verification of one or more keys, which may comprise a shared key in the case of symmetrical cryptography, or one of a pair of public and private keys in the case of asymmetrical cryptography.

With reference again to Figure 11, in an operation 1105 (CONFIGURE CACHE/SCRATCH PAD MEMORIES AND GENERATE/COMPLETE ROUTING TABLE), the primary network chip for example configures the cache and scratch pad memories and generates/completes a routing table. In particular, the primary network chip, for example under the direction of the host processor, is for example arranged to configure the memory resources of each of the network chips to define memories that are to provide cache memory, and/or memories that are to provide scratch pad memory. During the same operation, or in a subsequent operation, the routing table is for example generated or completed. The routing table describes, for example, the addresses of each of the NoC routers 202 of each network chip 108, the addresses of each chiplet 110, and also the addresses of other resources, such as peripherals and/or external memory. For example, as described above with reference to Figure 4, the addresses of the routers are for example assigned based not only on the relative positions of the NoC routers 202 in each network chip 108, but also based on the relative positions and orientations of the network chips 108. Thus, the routing table is for example generated based on the presence and orientations of the network chips. The routing table is for example stored in a distributed manner in the NoC. For example, each NoC router 202 stores its routing information so that it is able to correctly route packets through the network.

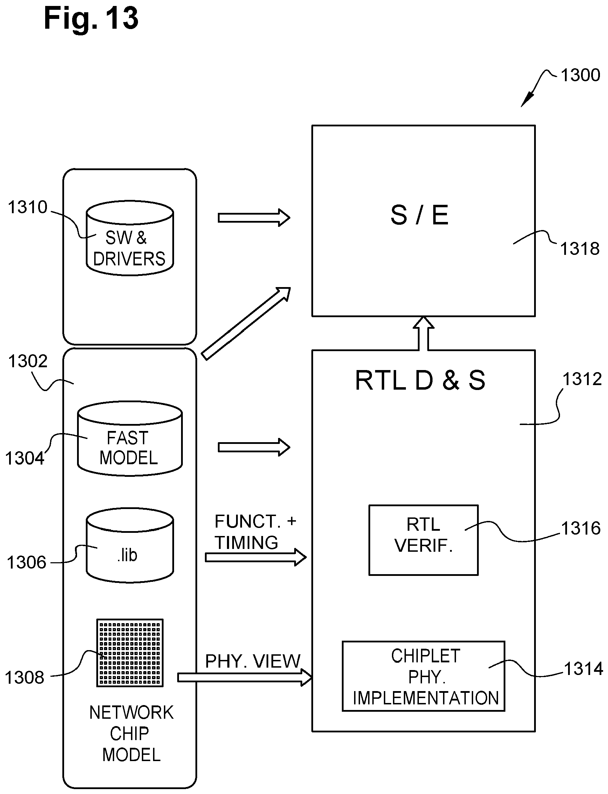

Figure 13 schematically represents an example of a conception system 1300 for the conception of the computing device 100 described herein.

The conception system 1300 for example permits the conception of one or more chiplets compatible with the network chip design. However, the chiplet design is for example developed independently of the design procedure of the network chip 108, and for example no modification to the network chip design is performed. This has advantages, as it leads to a relatively fast conception of the chiplets.

The system 1300 for example comprises, stored in a database, a network chip model (NETWORK CHIP MODEL) 1302, defining for example:
- a fast functional model (FAST MODEL) 1304 of the network chip 108, for simulating, or co-simulating, the chiplet RTL (Register Transfer Level) description assembled on a network chip, but using a relatively fast functional model, for example in C++, System C, or TLM (Transaction Level Modelling) description, rather than a full network chip database, which would be far heavier to process;
- an electrical and timing constraints model (.lib) 1306, for example in the form of a library file, that for example allows timing checks at the chiplet 110 boundary with the network chip 108; and
- a physical view 1308 of the network chip 108, defining for example the physical model defining the physical constraints, e.g. footprint, of the network chip 108, for example in the form of an LEF (Library Exchange Format) or GDSII (graphic design system II) file, which can be used to define the layout of the chiplet 110.

Furthermore, the database also for example stores software and drivers (SW & DRIVERS) 1310 associated with the network chip 108. The software and drivers for example include firmware of the network chip 108 implementing it functions, including drivers for the various input/output interfaces, and boot code for execution during the boot sequence of the network chip 108.

The system 1300 for example comprises a chiplet development and synthesis module (RTL D&S) 1312, which is for example configured to develop and synthesize, based in part on the network chip model 1302 and also on a specification of the chiplet, an RTL (register transfer level) representation of the chiplet. Furthermore, the module 1312 is for example configured to perform RTL verification (RTL VERIF.) 1316, and to generate a physical implementation (CHIPLET PHY. IMPLEMENTATION) 1314 of the chiplet, defining for example the layout and other characteristics of the physical design.

A system high level simulation and/or emulation module (S/E) 1318 is for example configured to receive the network chip model 1302 and the software and drivers 1310, and to perform high level simulation and/or emulation of the chiplet RTL design in combination with the network chip model 1302 in order to valid the design.

The modules 1312 and 1318 are for example implemented in software executed in a suitable data processing environment.

An advantage of the embodiments described herein is that, by providing a network chip capable of communicating with other network chips and having one or more interfaces for coupling a chiplet, it constitutes a relatively low cost and versatile building block for forming a computing device. Furthermore, by assembling one or more chiplets on network chips, the chiplets comprising compute clusters, a different technology can be used for the chiplets from the technology of the network chip. For example, an advanced technology can be used for the chiplets, providing high performance. Furthermore, the resulting computing device for example has relatively high power efficiency due to relatively short die-to-die links between the network chips, and between each network chip and its corresponding chiplets. Another advantage is the flexibility and scalability of the solution, as it is possible to increase processing resources by simply adding one or more chiplets to the device, possible with a new network chip, and/or to add network chips and/or external memories in order to increase memory resources. Furthermore, an advantage of the close proximity of the memories of the NoC with respect to the compute clusters of the chiplets is that these memories can be configured as additional cache, or as scratch pad memory.

Various embodiments and variants have been described. Those skilled in the art will understand that certain features of these embodiments can be combined and other variants will readily occur to those skilled in the art. For example, while embodiments have been described based on network chips comprising a network on chip, in alternative implementations, other types of programmable infrastructures could be used, in which the routers are more generally any access point capable of being coupled to a processing element.

Furthermore, while examples have been described in which each network chip 108 has at least one chiplet 110 positioned thereon, in alternative embodiments, one or more of the network chips 108 may have no chiplet 110 positioned thereon. Such a network chip 108 for example provides only memory resources.

Furthermore, while examples based on external DDR memories have been described, it will be apparent to those skilled in the art that the use of single data rate (SDR) memories would also be possible. Furthermore, other types of memories can be implemented instead of or in addition to the DDR memories, such as non-volatile memories, e.g. FLASH memories, with their specific interface, e.g. serial FLASH interface, containing for instance the system firmware binary code.

Finally, the practical implementation of the embodiments and variants described herein is within the capabilities of those skilled in the art based on the functional description provided hereinabove.

## Claims

1. A network chip (108) comprising:
- a programmable infrastructure (201) having a plurality of access points (202);
- at least one chiplet communications interface (3D PLUG) suitable for interfacing with at least one chiplet (110) when stacked on the network chip, each chiplet communications interface (3D PLUG) being coupled to a corresponding one of the access points (202); and
- a plurality of network-to-network communications interfaces (206, 208, 210, 212) each suitable for interfacing with another network chip (108).

2. The network chip of claim 1, further comprising a memory circuit (204) coupled to each router (202).

3. The network chip of claim 2, wherein at least one of the memory circuits (204) is reconfigurable as either a cache memory (204') or a scratch pad memory (204") of the first processing element, the first processing element (602, 700, 800) for example comprising a memory management unit defining an allocation of cache memory and/or scratch pad memory to the first processing element.

4. The network chip of claim 2 or 3, wherein at least one of the memory circuits (204) is a non-volatile memory.

5. The network chip of any of claims 1 to 4, wherein the programmable infrastructure is a network on chip (201), and the access points are NoC routers (202) of the network on chip.

6. A computing device comprising: the network chip of any of claims 1 to 5 mounted on a substrate (102).

7. The computing device of claim 6, further comprising at least one further network chip (108) according to any of claims 1 to 5 mounted on the substrate (102), the network chip and the at least one further network chip being interconnected by the network to network communications interfaces (206, 208, 210, 212).

8. The computing device of claim 7, wherein the network chips (108) are identical to each other, at least one of the network chips having an orientation different to at least one other of the network chips.

9. The computing device of claim 8, wherein each of the access points (202) of each network chip (108) is assigned and stores an address based on its location in its programmable infrastructure (201) and based on the orientation of the network chip (108) with respect to the other network chips (108) .

10. The computing device of claim 8 or 9, wherein each network chip (108) comprises, at a first of its edges, an external memory interface (218), and wherein a first of the network chips (108A) is orientated so that its first edge is adjacent to a first edge of the computing device, and a second of the network chips (108B) is orientated so that its first edge is adjacent to a second edge of the computing device, the first and second edges of the computing device for example being perpendicular edges, or opposite edges, of the computing device.

11. The computing device according to any of claims 6 to 10, further comprising:
- at least one chiplet (110) positioned on the network chip (108), each chiplet (110) comprising at least a first processing element (602, 700, 800) coupled, via a chiplet communications interface (3D PLUG), to a first of the access points (202) of the network chip (108) on which the chiplet (110) is positioned.

12. The computing device of claim 11, wherein each chiplet (110) is configured to operate in an asynchronous manner with respect to the network chip (108) on which it is positioned.

13. The computing device of claim 11 or 12, wherein the at least one chiplet (110) is positioned on the network chip (108) in a face-to-face arrangement.

14. The computing device of any of claims 11 to 13, wherein the at least one chiplet (110) is positioned on the network chip (108) in a face-to-back arrangement.

15. A method of conception of the computing device of any of claims 11 to 14, comprising the conception of the at least one chiplet (110) based on a network chip model (1302) representing the network chip (108).

16. A method of configuring a computing device comprising one or more network chips (108) mounted on a substrate (102), the method comprising:
- detecting, by a first of the network chips (108), the number and orientation of network chips (108) of the computing device, wherein each network chip (108) implements a programmable infrastructure (201) having a plurality of access points (202); and
- detecting, by the first network chip (108), the presence or absence of at least one chiplet (110) positioned on each network chip (108) and coupled, via a chiplet communications interface (3D PLUG), to at least a first of the access points (202) of the network chip (108) on which the chiplet (110) is positioned.
